(19) Europäisches Patentamt
European Patent Office
Office européen des brevets

(11) **EP 3 114 937 B1**

(12) **EUROPEAN PATENT SPECIFICATION**

(45) Date of publication and mention
of the grant of the patent:
**07.04.2021 Bulletin 2021/14**

(51) Int Cl.:
***A23C 9/18*** (2006.01)

(21) Application number: **16001115.1**

(22) Date of filing: **19.01.2012**

(54) **SOLID MILKS**

FESTE MILCHPRODUKTE

LAITS SOLIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.01.2011 FR 1150418**

(43) Date of publication of application:
**11.01.2017 Bulletin 2017/02**

(62) Document number(s) of the earlier application(s) in accordance with Art. 76 EPC:
**12703610.1 / 2 665 365**

(73) Proprietor: **N.V. Nutricia**
**2712 HM Zoetermeer (NL)**

(72) Inventors:
• **Rastello-De Boisseson, Marie**
**45100 Orleans (FR)**
• **Bonneau, Eric**
**38460 Vernas (FR)**
• **Coenen, Gerardus Johannes**
**3584 CT Utrecht (NL)**

(74) Representative: **Nederlandsch Octrooibureau**
**P.O. Box 29720**
**2502 LS The Hague (NL)**

(56) References cited:
EP-A1- 1 048 216          EP-A1- 1 769 682
WO-A1-2007/077970   WO-A1-2010/073724
WO-A1-2011/158480   WO-A1-2016/032320
DE-A1- 2 433 650

• J. T. FELL ET AL: "Effect of particle size and speed of compaction on density changes in tablets of crystalline and spray-dried lactose", JOURNAL OF PHARMACEUTICAL SCIENCES, vol. 60, no. 12, 1 December 1971 (1971-12-01), pages 1866-1869, XP055021193, ISSN: 0022-3549, DOI: 10.1002/jps.2600601223
• DATABASE FSTA [Online] INTERNATIONAL FOOD INFORMATION SERVICE (IFIS), FRANKFURT-MAIN, DE; MCKENNA A B: "Examination of whole milk powder by confocal laser scanning microscopy.", XP002654508, Database accession no. FS-1997-12-P-0164 & JOURNAL OF DAIRY RESEARCH, vol. 64, no. 3, 1997, pages 423-432, NEW ZEALAND DAIRY RES. INST. DOI: 10.1017/S0022029997002331
• SHIBATA M. ET AL: "2010 IDF Dairy Innovation Awards, Best newcomer brand or business award, Development of Production Technology for Compressed Powdered Formula", MILK SCIENCE, vol. 59, November 1010 (1010-11), XP055522302,

Remarks:
The file contains technical information submitted after the application was filed and not included in this specification

**Description**

Field of the invention

The present invention is in the field of nutrition and relates to solid milks.

Background of the invention

In the food industry there is a constant search for increasing the convenience of food products. In particular milk containing products need specific care in order to improve shelf life. Since a long time the milk products are produced in the form of a dry powder. Shelf life of dry products is much longer than the shelf life of the fresh milk product. Powders, however, are not very convenient since a measuring device of some kind is needed to measure the right dose when dissolving the powder.

To solve the dosing problem, it has been proposed to use "solid milks" which are compacted or compressed milk powder. The average size of the milk particles is typically comprised within the range of 30 $\mu$m to 700 $\mu$m, preferably within the range 60 $\mu$m to 400 $\mu$m, more preferably within the range 75 $\mu$m to 300 $\mu$m. The solid milk - limited by an outside surface - is generally provided in the form of tablets, pellets or pills having typically a side size in the range of at least a few millimetres to a few centimetres, such as typically having a cubic shape (and outside surface) of 25 mm side or around or a cylindrical shape (and outside surface) of 25 mm diameter or around and a weight around 2 g to 10 g, preferably around 4 to 5 g. This is the field of the invention.

Such a solid milk combines the advantages of milk in powdered form with regard to storage period and stability with the advantages of the solid form, which can be handled easily and which may also be pre-dosed for the preparation of a given milky beverage.

When making tablets from milk containing powders, several problems arise related to solubility and hardness of the tablets. In general harder is the tablet lower is its solubility. In addition due to the pressure used to compact a milk powder, emulsified fat can be released resulting in an increased free fat content of the tablet. As is common knowledge, free fat has a negative impact on the shelf life of milk products, due to the increased sensitivity to oxidation of the free fat. Normally if the free fat content is higher than 4 wt.% based on the dry weight of the product, this will lead to unacceptable oxidation of the free fat.

Solutions to the above problems have been proposed in WO 2007/077970, WO 2010/073724 and EP 1048216. These prior art documents disclose alternative methods for making tablets that comprise milk or milk derivatives.

When processing milk powders or milk containing powders into tablets, it is important that the capacity of the process is sufficiently high. For example, when producing infant formula, a capacity of several tons of compacted infant formula per day should be feasible. If an average tablet weight is about 4-5 grams, 200,000 tablets represent about 1 ton compacted powder. For example, a tabletting speed of 750 tablets per minute will result in a production speed of about 4.5 hours per ton powder. A high speed process is therefore necessary.

WO2007/077970 describes a solid milk, the volume of which being between 1 cm$^3$ to 50 cm$^3$, having a porosity of 30%-60%, a fat content equal to or more than 5% by weight, a water content between 1% to 4% by weight. Such solid solid milk is made by a method comprising:

- a compression step for compressing powdered milk to obtain a solid form of compressed powdered milk with a compression force between 50KPa to 30MPa, the compression speed - which is the movement speed of the pestle in the compression moulding machine, obtained by dividing compression displacement by compression duration - being comprised between 0,1 mm/s to 100 mm/s, a compression retention duration comprised between 0,1 s to 1 s - duration to maintain the maximum compaction pressure - being preferably provided; the size of the powdered milk (after a spray drying process) assumes about 5 $\mu$m to 150 $\mu$m;
- a humidifying step for humidifying the compressed powdered milk obtained by the compression step, whose duration is comprised between 5 s to 1 h at a temperature comprised between 30°C to 100°C, by which a part of the milk particle in the vicinity of the surface of the compressed powdered milk melts to be bridged;
- and a drying step for drying the compressed powdered milk humidified by the humidifying step, whose duration is comprised between 12 s to 2 h.

Each of the three steps of such a method having a significant duration, the total duration of the process is long and, as consequence, it does not make it possible to obtain a satisfactory production rate. Further, the chance on microbial contamination is increased.

WO 2007/077970 states that the hardness of the solid milk may be between 30 N and 200 N but failed to take into consideration the other key physical parameter which is friability. Friability reflects the loss of powder of the solid milk after having been dropped according to predetermined conditions and may be measured with the aid of a friabilimeter.

WO 2010/073724 describes a same kind of solid milk, manufactured according to a method comprising also the three steps of compaction moulding, humidification and drying and comprising a supplementary previous classification step for obtaining powdered milk having larger particle diameter than prescribed particle diameter by classifying the powdered milk which is an ingredient of the solid milk, the compaction moulding step being practiced with the powdered milk obtained by the classification process. Such classification step is a process for using a sieve the mesh size of which is 200 $\mu$m to 700 $\mu$m.

When the compressed powdered milk is humidified, the particles located close to its surface are partially dissolved and bridged together. With the drying step, the strength close the surface of the powdered milk can be increased on a very limited thickness of one powder grain, compared to the strength of the inner part of the powdered milk. The degree of bridges is adjusted by adjusting duration of humidification step.

EP 1048216 discloses a different method wherein the powder is wetted and agglomerated before the compression step. This has several negative implications, including the fact that the powder will not be free flowable anymore, making it difficult to feed the tabletting machine and in addition, it will be much more difficult to dry the compressed tablet since the interior of the tablet is still humid and will dry much slower resulting in an unacceptable risk of microbial growth.

WO2011/158480 discloses a solid compressed milk with favourable solubility and strength and the method of manufacturing the solid milk. The method for the manufacture of solid milk comprises compressed powdered milk to obtain compressed powdered milk, humidifying the compressed milk, drying the humidified compressed powdered milk. A part of amorphous lactose at the surface of the solid milk is crystallized at the steps of humidifying and drying. Milk Science, Vol. 59, No. 3, 2010, Shibata et. al, discloses the development of production technology for compressed powdered Formula by Meiji Dairies.

Summary of the invention

Based on the prior art mentioned above, there is a need for a solid milk which overcome the drawbacks of the prior art, that is, in combination, has a sufficient hardness, an appropriate friability, a good solubility, and that can be manufactured with a high capacity, in condition preventing at most as possible microbial contamination.

To this effect, the object of the present invention is a compressed solid milk obtained by the method comprising a compression step, where milk particles are compressed to obtain a compressed and solid milk unit, then a moistening step, then a drying step, wherein:

- the compression step is carried out with a compaction ratio comprised between 50 % and 80 %,
- in the moistening step, water is sprayed on the outside surface of the said compressed and solid milk unit with an amount comprised between 0.1 mg and 8 mg / cm$^2$ of the area of the said outside surface, the duration of the moistening step being less than 1 s, to obtain a moistened solid unit having a moistened outside layer of at least two rows of milk particles,
- the drying step follows the moistening step less than 10 s, the duration of the drying step being less than 30 s, wherein the drying is carried out by applying short-wavelength infrared (IR),

so as to obtain a solid milk having a core/crust structure, the thickness of the crust being at least the thickness of two rows of milk particles.

According to a possible embodiment, in the compression step, the milk powder is compressed at a compression speed comprised between 110 mm/s and 200 mm/s.

According to possible embodiments, either the compression step is not followed by a maintaining step where the compression pressure or the volume of the compressed and solid milk unit is maintained and/or the moistening step follows the compression step within less than 10 s.

According to a possible embodiment, in the moistening step, water is sprayed with an amount comprised between 0.5 mg and 5 mg / cm$^2$ of the area of the said outside surface.

According to a possible embodiment, the duration of the moistening step is comprised between 0.050 s and 0.500 s.

According to a possible embodiment, the drying step follows the moistening step less than or equal to 5 s.

According to a possible embodiment, the duration of the drying step is comprised between I s and 20 s.

According to a possible embodiment, the drying step enables to obtain a level of moisture of the solid milk which is comprised within a range of $\pm$ 0.2 % around the initial level of moisture of the milk powder.

According to a possible embodiment, the drying step is carried out by infrared.

According to a possible embodiment, the compression step is carried out with a compaction ratio comprised between 56 % and 62 %.

According to a possible embodiment, the temperature of water sprayed during the moistening step is comprised either between 5 °C and 25 °C or between 75 °C and 95 °C.

According to a possible embodiment, the method is carried out within air at ambient pressure, at temperature comprised between 15 °C to 25 °C, with relative moisture less than 50 %.

According to a possible embodiment, after the drying step, a cooling step where the solid milk is cooled at temperature below 30 °C, preferably comprised between 0 °C and 30 °C, even more preferably comprised between 15 °C and 30 °C.

According to a possible embodiment, after the drying step or after the cooling step if there is one, a packaging step where the solid milk is packaged within a moisture-tight packaging, preferably under inert gas.

According to a possible embodiment, the milk particles are selected with an average size comprised between 30 μm and 700 μm, preferably being comprised between 60 μm and 400 μm, more preferably being comprised between 75 μm and 300 μm.

According to a feature of the invention, the crust thickness of the solid milk is comprised between 150 μm and 1.5 mm, particularly is comprised between 200 μm and 1,000 μm, more particularly is comprised between 200 μm and 500 μm.

According to a possible embodiment, the method is carried out at a production rate comprised between 750 to 2000 solid milks per minute.

According to a first possible embodiment, the milk powder is selected as being whole milk powder or infant milk powder, the compaction ratio is selected to be comprised between 56 % to 62 %, and the compaction pressure is selected to be comprised between 1 MPa and 8 MPa, preferably between 2 MPa and 6 MPa, more preferably between 2 MPa and 4 MPa.

According to a second possible embodiment, the milk powder is selected as being skimmed or semi-skimmed milk powder, the compaction ratio is selected to be comprised between 70 % and 80 %, and the compaction pressure is selected to be comprised between 20 MPa and 30 MPa.

According to a feature of the invention, the solid milk has a mechanical strength comprised between 0.01 MPa and 0.6 MPa.

According to a feature of the invention that may be considered, the solid milk may have a friability percentage less than 10 %.

According to a feature of the invention, the solid milk has a dissolution duration in an aqueous medium, at a temperature comprised between 20 °C and 100 °C, less than one minute.

It has surprisingly be found that the method described above permits to manufacture with a high capacity and in condition preventing at most as possible microbial contamination, solid milks having a core/crust structure with an average thickness of the crust of at least the thickness of two rows of milk particles, i.e. a crust thickness preferably comprised between about 150 μm and 1.5 mm, and even comprised between about 200 μm and 1,000 μm, and even comprised between about 200 μm and 500 μm, having in combination, a sufficient hardness, an appropriate friability and a good solubility.

The invention is as defined by the appended claims.

Detailed description of the ivention

The invention must be understood in the light of the following definitions.

■ "Milk" means a material selected among skimmed milk, semi-skimmed milk, whole milk, modified milk and infant milk. Modified milk is preferably a milk containing substituted fat, such as vegetable fats, or a milk free from lactose or containing added sugars, such as fructose, sucrose, etc.

■ "Powder" in relationship to milk, means solid small fractions of milk, i.e. milk particles (as well individual and agglomerates).

■ "Average size" in relationship to milk particles, means the equivalent diameter of the milk particles for which the value of the cumulative distribution is 50%, usually called diameter d50. The size of powder can be done by means of a laser particle size analyser. The average size of milk particles is comprised between 30 μm and 700 μm, preferably is comprised between 60 μm and 400 μm, more preferably is comprised between 75 μm and 300 μm.

■ "Solid milk" means a compacted or compressed milk powder limited by an outside surface. Such solid milks are generally provided in the form of tablets, pellets or pills having typically a side size in the range of at least a few millimetres to a few centimetres, such as typically having a cubic shape (and outside surface) of 25 mm side or around or a cylindrical shape (and outside surface) with 25 mm diameter or around and a weight around 2 g to 10 g, for example between 4 g to 5 g.

- "Area of the outside surface" in relationship with solid milk, means the area of the envelop of the said outside surface.

- "Crust" in relationship to the solid milk, means the outside part - including the outside surface - of the solid milk, having the shape of a layer of a significant thickness of at least the thickness of two rows of milk particles, the structure of the said crust being mainly continuous in the sense that the milk particles and/or the milk agglomerates are no longer mechanically substantially separated each from the other having being dissolved, the continuous structure having however a certain porosity. The crust is made by wetting and drying of the outside of the solid milk. According to the embodiments, the chemical composition of the crust is identical or not to the chemical constitution of the core.

- "Core" in relationship to the solid milk, means the inner part of the solid milk enclosed within the crust, the structure of such core being mainly discontinuous (and also porous) in the sense that the milk particles and the milk agglomerates are touching each other, leaving empty spaces between.

- "Row of milk particles" means an arrangement of milk particles next to each other more or less along a line, after a compaction of such particles. The thickness of two rows of milk particles is at most equal and close to twice the average size of the milk particles.

- "Average thickness of the crust" means the average value of the local thickness of the crust in ten different points distributed by chance on the outside surface of the crust. It is expressed in micrometer ($\mu$m) or millimeter (mm).

- "Local thickness of the crust in a point of its outside surface" means the distance between the said point of the outside surface of the crust and the interface between the crust and the core counted along a line substantially perpendicular to the outside surface of the crust.

- "Interface between the crust and the core" means the location where the structure of the solid milk is no longer mainly continuous to become mainly discontinuous in the senses defined above. Such change continuous-discontinuous structure can be observed visually on a cut or an image of the cut of the solid milk using a scanning electron microscope. The said location where the structure is no longer mainly continuous to become mainly discontinuous is a line or the medium line of a transition zone between a mainly continuous structure (crust) where the different milk particles or milk particle agglomerates cannot be visually clearly identified and a mainly discontinuous structure (core), where the different milk particles or milk particle agglomerates can be visually clearly identified. So, it is possible, on the image of a cut to draw two lines: an outside average limit line of the crust at the outside surface of the solid milk and an inside average limit line of the crust where the visible densification of the crust starts to fade, the distance between the two lines being the average thickness of the crust, as previously calculated.

- "Compression speed" means the movement speed of the movable compressing punches, i.e. the ratio displacement distance of said punches / compression duration. It is expressed in mm/s.

- "Duration" means the interval of time during which something occurs. The words duration and time mean the same.

- "Compaction pressure" means the pressure applied to the milk powder being into the die to compress it. Such compaction pressure is expressed in MPa.

- "Solid milk mechanical strength" reflects the hardness of the solid milk. It is the ratio 2F/S where F is the breaking force applied diametrically in opposite senses to the solid milk until it breaks and S the area of the solid milk where the force F is applied, i.e. the lateral area of the solid milk. The breaking force F is converted into pressure so as to be independent of the contact surface to which the force was applied. For a cylindrical tablet, for example, the pressure at break or mechanical strength expressed in MPa is equal to twice the breaking force F expressed in N divided by the involved crown surface area of the cylinder expressed in mm2. The solid milk mechanical strength is expressed in MPa (or in kPa). To measure the solid milk mechanical strength, it can be used of a hardness tester such as the known 8M DR. SCHLEUNIGER® of PHARMATRON®.

- "Compaction ratio" means a ratio calculated in accordance with the following formula:

$$\text{Compaction ratio} = (\text{apparent density of the solid milk/true density of the milk powder})*100.$$

- "Friability percentage" means (initial mass of the solids - mass of the solids after the test)/initial mass of the solids x 100. To measure the % friability, it can be used a friability tester such as the known F2 equipped with a friability drum of SOTAX®. In order to measure the friability, five solid milks are rotated within the drum at a speed of 20 rpm during 30 s (i.e. 10 revolutions). The solids are weighed before and after the test. Before being weighted the solids are dedusted with a brush.

- "Moisture level" or "level of moisture" in relationship to milk powder or solid milk, is expressed as a ratio and calculated as the weight of water in the powder or solid milk / weight of total mass of powder + water or solid milk + water. It is expressed as a percentage (%).

The words and expressions used in the description and claims must be understood and construed according to the above mentioned definitions, as well as technical equivalents. Further, any range must be considered to be inclusive of the limits of the range.

The invention shall be now described in detail according to several embodiments and several non-limited examples, with the support of the following figures which represent a possible and non-limitative realization

Description of the figures

Figure 1 is a drawing which reflects a photograph obtained with a scanning electron microscope of a cut of a part of a solid milk according to the invention, showing its crust (1) and its core (2) comprising particles (3); the interface between the crust and core (4); the outisde surface (5); the inside average limit line of the crust (6) and outside average limit line of the crust (7) and the average thickness of the crust (8).

Figure 2 is a drawing like figure 1, showing the crust of the solid milk on the outside surface of the solid milk.

Figure 3 is a drawing like figures 1 and 2, showing the core inside the solid milk.

It is now described the method for producing solid milks according to the invention.

The method for producing solid milks according to the invention comprises three steps which are, a first compression step, where milk particles are compressed to obtain a compressed and solid milk unit, then a second moistening step and then a third drying step. The method can comprise a four step where the solid milk is cooled and a final step where the solid milk is packaged.

The method makes use of milk powder, as defined above, the average size of milk particles being comprised between 30 μm and 700 μm, preferably being comprised between 60 μm and 400 μm, more preferably being comprised between 75 μm and 300 μm.

During the first step of the method, which is a compression step, the milk particles are compressed to obtain a compressed and solid milk unit. The compression speed is preferably comprised between 110 mm/s and 200 mm/s and more preferably between 125 mm/s to 170 mm/s.

Compression is preferably carried out at a compaction ratio comprised between 50% and 80%, in particular between 56 % and 62 %. Defining the parameters of the compression step to obtain a compaction ratio within the given ranges of compaction ratio as mentioned above is known or easy done by the man of the art in the field of powder compression.

According to a first possible embodiment, the milk powder is selected as being a whole milk powder or an infant milk powder, the compaction ratio is preferably selected to be comprised between 56 % to 62 % and the compaction pressure is selected to be comprised between 1 MPa and 8 MPa, preferably between 2 MPa and 6 MPa, more preferably between 2 MPa and 4 MPa.

By contrast, according to a second possible embodiment, the milk powder is selected as being a skimmed or a semi-skimmed milk powder, the compaction ratio is preferably selected to be comprised between 70 % and 80 % and the compaction pressure is selected to be comprised between 20 MPa and 30 MPa.

These compaction ratios make it possible to obtain solid milks having a good solubility in use conditions. By way of example, in the case of infant milk formula, the dissolution duration in an aqueous medium at a temperature comprised between 20 °C and 100 °C is less than one minute and more preferably less than 30 s (see the solubility test detailed in example 1).

In accordance with one possible embodiment, a rotary press manufactured and sold by the firm EUROTAB® TECHNOLOGIES is used to carry out the compression step.

The compression step is preferably carried out so as not being followed by a step of maintaining the compression pressure or the volume after the compression step, i.e. a holding duration of about zero seconds.

It is known that compressed and solid units are prepared from powder by confining an appropriate and specific known quantity of said powder in a specific appropriate compaction die and by applying a compaction pressure to the powder function of the pressure applied to the powder via the upper and lower punches and the walls of the die and the volume of confinement of powder defined by the walls surrounding the powder to be compressed and compacted, the pressure and the volume being linked together. It is known also that after compression and once the compaction ratio and the compression speed are significant, the compressed and solid units undergo a process called "elastic recovery", which is the ability to a powder to regain volume from the moment the compression force ceases. Elastic recovery is generally expressed in the form of a percentage. It is obtained by dividing the difference between the unit thickness after elastic recovery and the unit thickness under pressure by the unit thickness under pressure times 100. It is known that this process of elastic recovery may be limited and controlled by providing a step of maintaining the pressure or the volume of compression for a certain duration after the compression step, i.e. holding duration. The introduction of a step of maintaining pressure or volume is favoured in the document WO 2007/07790 cited previously. However, the inventors demonstrated that in the context of the invention, such maintaining step is not advantageous for the production capacity of the method. It has been further demonstrated that, with regard to the milk powder, not only is the elastic recovery relatively limited, but that step of maintaining pressure or volume also had a detrimental effect on the dissolution duration of the solid milks. Consequently, that step of maintaining pressure or volume could preferably be omitted - i.e. its duration being almost about 0 second (see example 2) -, or be as shortest as technically possible. So the second moistening step can follow the first compression step within less than 10 s, which is the delay technically necessary to pass the first step to second step.

At the end of the first compression step, it is obtained a compressed and solid milk unit of compressed milk powder. Such unit does not generally exhibit sufficient hardness to be packaged, commercialised and ultimately handled by the consumer. The inventors have demonstrated that the conditions of the compression step as presented above make it possible to obtain a compressed and solid milk unit which has a sufficient cohesion to withstand the following steps of the method - i.e. the second moistening step and the third drying step -, without degradation.

Further, the compression step as well as the following steps (moistening step, drying step, possibly cooling step, and finally packaging step) may be performed at a high production rate of at least 750 solid milks per minute, and preferably comprised between 1000 solid milks /minute and 2000 solids/minute. Such production rate allows a production industrially in good conditions.

During the second step of the method, which is a moistening step, water is sprayed on the outside surface of the compressed and solid milk unit obtained at the end of the first compression step.

Such moistening is preferably - or should be - carried out by spraying during a controlled duration, with controlled amounts of water, and in a manner as homogeneous as possible, over all the outside surface of the compressed and solid milk unit.

The amount of water sprayed is preferably comprised between 0.1 mg and 8 mg per $cm^2$ of the area of the said outside surface, more preferably between 0.5 $mg/cm^2$ and 5 $mg/cm^2$, even more preferably 0.7 $mg/cm^2$ and 2.5 $mg/cm^2$.

The duration of the moistening step is preferably less than 1 s, more preferably is comprised between 0.050 s and 0.500 s and more preferably between 0.010 s and 0.300 s, depending on the production rate used. The water added to the solid milk must be located solely on the outside surface of the unit without penetrating substantially deeply into the unit, so as to obtain a moistened solid unit having a moistened outside layer of at least two rows of milk particles, After drying, such moistened outside layer will form the crust of the solid milk finally obtained.

The water may be sprayed at a temperature comprised either between 5 °C and 25 °C, preferably comprised between 10 °C and 15 °C, or between 75 °C and 95 °C, preferably between 80 °C and 90 °C, so as to reduce the risks of development of microbial growth.

A device comprising at least two atomisers is preferably used to spray the amount of water required per solid milk. The number and arrangement of the atomizers will depend on the size and geometry of the tablets to moisten.

The second step of the method according to the invention aims to moisten the outside layer of at least two rows of milk particles of the compressed and solid unit. With this second step, combined with the third drying step, the hardness and the friability of the solid milk are improved, while at the same time keeping its solubility within the required ranges in relationship to the use of the solid milk.

The amount of water should be enough to solubilise at least two rows of milk particles at the outside surface of the solid milk, in order to solubilise over the surface of the particles the soluble active agents so as to create, after drying provided at the third step, bridges on the surface of the particles which make it possible to increase the hardness of the solid milk.

However, the duration of moistening must be as short as possible so as to limit the solubilisation of the soluble active agents, to limit the penetration of water into the core of the solid milk, to limit the drying duration, and to reduce the risks of development of bacteria.

The spraying of water over the compressed and solid unit makes it possible to limit and control the amount of water and the spraying duration perfectly, to distribute it homogeneously and to facilitate the drying step.

During the third step of the method, which is a drying step, the solid milk obtained at the end of the second moistening step is subjected to a drying.

The aim of the third drying step is to obtain a level of moisture of the solid milk which is comprised within a range of $\pm$ 0.2 % around the initial level of moisture of the milk powder, preferably $\pm$ 0.1 %, more preferably $\pm$ 0.05 %, and even, possibly, to restore the initial level of moisture.

During the second moistening step of the method according to the invention, the level of moisture remains identical, or substantially identical, in the core of the unit. For this purpose, the third drying step follows the moistening step less than 10 s, preferably less than 5 s, and its duration is less than 30 s, preferably is comprised between Is and 20 s and more preferably between 3 s and 11 s (i.e. the minimal technical possible duration) so as to avoid the penetration of the water sprayed over the outside surface of the solid milk towards its core.

The third drying step is carried out by infrared (IR), preferably with the aid of an infrared tunnel. IRs which emit short wavelengths so as to avoid the Maillard reaction over the surface of the solid milks. The use of IR is permitted thanks to the implementation of spraying of water during the second step, which makes it possible to dispense a limited amount of water distributed homogeneously. The IR basically dries to a shallow depth. All the water added at the surface during the second step is thus eliminated within a very short drying duration, the initial weight of the solid milk before moistening is restored and a thin and tough crust is formed.

So as to avoid powder sticking, which would be inconvenient, the method is preferably carried out within air at ambient pressure, at temperature comprised between 15°C to 25°C, with relative moisture less than 50 %.

The method is carried on in order that the average thickness of the crust is of the thickness corresponding to at least two rows of milk particles and/or comprised between 150 $\mu$m and 1.5 mm.

The method according to the invention may also include a fourth cooling step, aimed to cool the solid milk having been dried, to a temperature below 30 °C, preferably comprised between 0 °C and 30 °C, even more preferably comprised between 15 °C and 30 °C.

The method according to the invention may also include a final packaging step, after the third drying step or after the fourth cooling step if there is one, aimed at cooling, where the solid milk is packaged within a moisture-tight packaging, preferably under inert gas. In combination with the fourth cooling step, this makes possible to avoid any condensation inside the packaging. The moisture-tight packaging under inert gas is important so as to prevent any uptake of moisture of the solid milk, which would have a detrimental effect on the dissolution behaviour and could lead to the development of bacteria.

The combination of the different steps of the method according to the invention makes it possible to obtain production rates of at least 750 solids per minute, preferably comprised between 750 and 2,000 solid milks per minute.

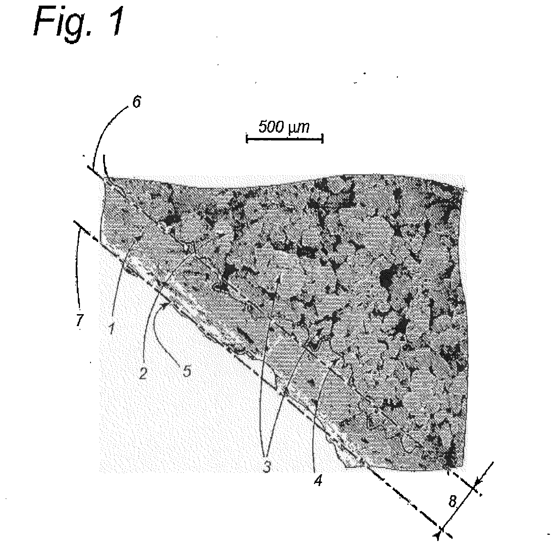

It is now described the solid milk according to the invention, more particularly in reference to figures 1 to 3.

Such solid milk can be produced by the method previously described.

The solid milk according to the invention has a core/crust structure (see figure 1). The outside part of the solid milk, including its outside surface, is a crust having the shape of a layer of a significant thickness although the inner part enclosed within the crust is a core. Besides their respective location regarding the solid milk, the crust and the core differ in their structure and their level of porosity.

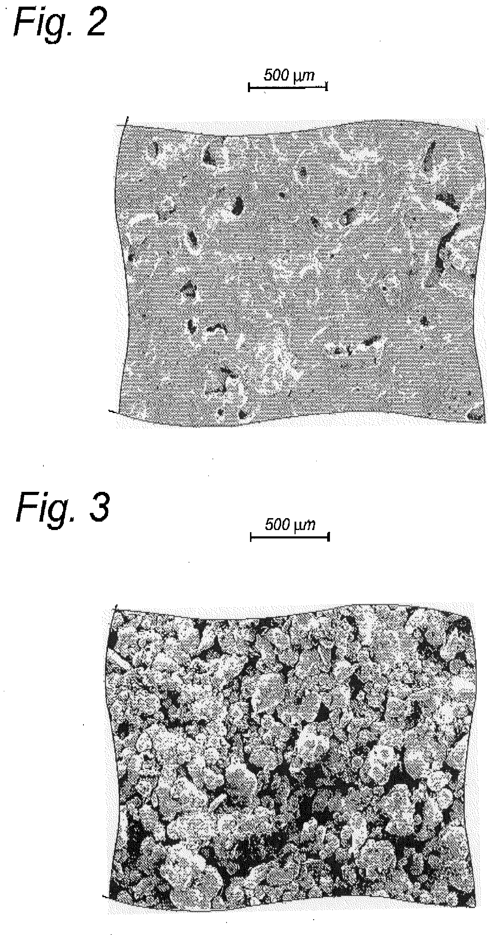

The structure of the crust is mainly continuous in the sense that the milk particles and the milk agglomerates are no longer mechanically substantially separated each from the other having been dissolved, the continuous structure having however a certain porosity (see figure 2).

The structure of the core is mainly discontinuous (and porous) in the sense that the milk particles and the milk agglomerates are touching each other, leaving empty spaces between, the particles having almost the same shape and dimensions as they have within initial milk powder (see figure 3).

Further, if as well the crust and the core are both porous, the level of porosity of the crust is less than the level of porosity of the core.

The interface between the crust and the core is a line or the medium line of a transition zone between a mainly continuous structure (crust) and a mainly discontinuous structure (core), where, respectively, the different milk particles or milk particle agglomerates cannot be visually clearly identified and, on the contrary, are visually clearly identified on a cut or a photograph of a cut of the solid milk.

According to the invention, the average thickness of the crust (as such thickness has been defined above) is comprised between 150 $\mu$m and 1.5 mm.

According to an embodiment, the thickness of the crust is comprised between 200 $\mu$m and 1,000 $\mu$m.

According to another embodiment, the thickness of the crust is comprised between 200 $\mu$m and 500 $\mu$m.

According to another aspect of the invention, the average thickness of the crust is at least the thickness of two rows of milk particles.

This provides the solid milk a substantial hardness so that it can be handled and transported whilst exhibiting rapid dissolution of less than 1 minute and preferably of less than 30 s, in conditions of use.

Such a core/crust structure can be obtained by the implementation of the method according to the invention described above. With the moistening step, it is obtained a moistened solid unit having a moistened outside layer of at least two rows of milk particles. Then, with the drying step, the moistened outside layer is dried to form the crust.

The solid milk mechanical strength of the solid milk according to the invention, measured as mentioned above (for example with a hardness tester such as the known 8M DR. SCHLEUNIGER® of PHARMATRON®), is comprised between 0.01 MPa and 0.6 MPa, and preferably between 0.02 MPa and 0.3 MPa, and more preferably between 0.03 and 0.3 MPa.

The friability percentage of the solid milk according to the invention that may be considered, measured as mentioned above, may be less than 10 %.

The solid milk according to the invention has a dissolution duration in an aqueous medium, at a temperature comprised between 20 °C and 100 °C, less than one minute. The measurement of the dissolution duration can be made by conductimetry, as it is more specifically described in example 2.

It is further disclosed (not part of the claimed invention):

1. A method for producing a solid milk, comprising a compression step, wherein milk particles are compressed to obtain a compressed and solid milk unit, then a moistening step, then a drying step, wherein:

- the compression step is carried out with a compaction ratio comprised between 50 % and 80 %,
- in the moistening step, water is sprayed on the outside surface of the said compressed and solid milk unit with an amount comprised between 0.1 mg and 8 mg per cm$^2$ of the area of the said outside surface, the duration of the moistening step being less than 1 s, to obtain a moistened solid unit having a moistened outside layer of at least two rows of milk particles,
- the drying step follows the moistening step less than 10 s, the duration of the drying step being less than 30 s,

so as to obtain a solid milk having a core/crust structure, the average thickness of the crust being comprised between 150 $\mu$m and 1.5 mm.

2. The method according to embodiment 1, wherein in the moistening step, water is sprayed with an amount comprised between 0.5 mg and 5 mg per cm$^2$ of the area of the said outside surface.

3. The method according to any one of embodiments 1 to 2, wherein the duration of the moistening step is comprised between 0.050 s and 0.500 s.

4. The method according to any one of embodiments 1 to 3, wherein the drying step follows the moistening step less than or equal to 5 s, and preferably wherein the duration of the drying step is comprised between 1 s and 20 s and preferably wherein the drying step is carried out by infrared.

5. The method according to any one of embodiments 1 to 4, wherein the compression step is carried out with a compaction ratio comprised between 56 % and 62 %.

6. The method according to any one of embodiments 1 to 5, wherein the temperature of water sprayed during the moistening step is comprised either between 5 °C and 25 °C or between 75 °C and 95 °C, preferably at a temperature comprised between 15 °C to 25 °C, with relative moisture less than 50 %.

7. The method according to any one of embodiments 1 to 6, comprising after the drying step a packaging step where the solid milk is packaged within a moisture-tight packaging, preferably under inert gas.

8. The method according to any one of embodiments 1 to 7, wherein the milk particles have an average size comprised between 30 $\mu$m and 700 $\mu$m, preferably comprised between 60 $\mu$m and 400 $\mu$m, more preferably comprised between 75 $\mu$m and 300 $\mu$m.

9. The method according to any one of embodiments 1 to 8, wherein the average thickness of the crust of the solid milk is comprised between 200 $\mu$m and 1,000 $\mu$m, more preferably is comprised between 200 $\mu$m and 500 $\mu$m.

10. The method according to any one of embodiments 1 to 9, wherein the milk powder is selected as being whole milk powder or infant milk powder, the compaction ratio is selected to be comprised between 56 % to 62 %, and the compaction pressure is selected to be comprised between 1 MPa and 8 MPa, preferably between 2 MPa and 6 MPa, more preferably between 2 MPa and 4 MPa.

11. The method according to any one of embodiments 1 to 9, wherein the milk powder is selected as being skimmed or semi-skimmed milk powder, the compaction ratio is selected to be comprised between 70 % and 80 %, and the compaction pressure is selected to be comprised between 20 MPa and 30 MPa.

The invention will be better understood upon reading the following examples.

Example 1: Milk product from milk powder

Tests 1 to 4: The infant milk powder has the following features:

- density of 0.46, that is to say a mass density of 0.46 g.cm$^{-3}$,
- average size between 100 $\mu$m and 400 $\mu$m, and
- level of moisture of 2.1 %.

Method: 4.5 g of milk powder are placed in a cylindrical die having a diameter of 25 mm. The milk powder is compacted at a compression speed of 125 mm/s until a compaction ratio of 58 % is achieved.

Once removed from the die of the press, the solid milk passes over the grid of a conveyor. It passes between four atomisers so as to receive, homogeneously, a quantity of sprayed water. The amount of sprayed water per solid milk depends on the speed of the conveyor and/or the water flow rates of the atomisers. The speed of the conveyor is controlled so as to ensure an output of 1100 solid milks/min. The moistening duration does not exceed 300 ms. The humidified solid milk passes immediately into an infrared tunnel equipped with four 2 KW IR lamps which enable homogeneous drying over all faces of the solid. The drying duration until the initial solid milk weight before moistening is restored and/or the initial moisture level of the solid before moistening is restored is between 5 and 12 s.

Once the temperature of the solid milk has returned to a temperature below 30 °C, the hardness of the solid milk is measured using the 8M DR. SCHLEUNIGER® hardness tester.

The table below collates the results obtained for different amounts of sprayed water per unit of surface area of the solid milk.

| Test N° | Compression speed (mm/s) | Compaction ratio (%) | Hardness before moistening (N) | Amount of water per unit of surface area (mg/cm$^2$) | Drying duration by IR (s) | Hardness after drying (N) |
|---|---|---|---|---|---|---|
| 1 | 125 | 58 | < 10 | 0.77 | 5 | 28 |
| 2 | 125 | 58 | < 10 | 0.93 | 5 | 40 |
| 3 | 125 | 58 | < 10 | 1.29 | 5 | 50 |
| 4 | 125 | 58 | < 10 | 1.70 | 12 | 89 |

Dissolution tests, carried out in a baby bottle, of the produced solid milks:

Dissolution was assessed by placing 6 solid milks in a baby bottle with 180 mL of water at 40 °C and by shaking for 30 s. After 30 s of manual shaking the content of the baby bottle was poured into a sieve of which the meshes measured 630 $\mu$m. The presence of lumps was observed visually. The estimation of the dissolution score was determined by a visual assessment, basically taking into account the size of the remaining lumps. In the absence of lumps, the dissolution score was 0. With the presence of lumps, a dissolution score from 1 to 10 was awarded depending on the size of the lumps observed on the sieve. The score 10 corresponds to the fact that almost all the solid milks are retained on the sieve. The larger the lumps and the closer they are to the initial size of the solid, the higher the score. Dissolution is acceptable if the dissolution score is less than or equal to 2.

The solid milks obtained in accordance with tests 1 to 4 all have a dissolution score of 1, which is advantageous for the desired application.

Test 5: The infant milk powder has a different composition compared to that of the powder used in tests 1 to 4:

- density of 0.51, that is to say a mass density of 0.51 g.cm$^{-3}$,
- average size between 100 $\mu$m and 400 $\mu$m, and
- level of moisture of 3 %.

| Test N° | Compression speed (mm/s) | Compaction ratio (%) | Hardness before moistening (N) | Amount of water per unit of surface area (mg/cm$^2$) | Drying duration by IR (s) | Hardness after drying (N) |
|---|---|---|---|---|---|---|
| 5 | 125 | 62 | < 10 | 1.50 | 11 | 50 |

The dissolution score of these solid milks is 1.

Test 6: The infant milk powder has a different composition compared to that of the powder used in tests 1 to 4:

- density of 0.43, that is to say a mass density of 0.43 g.cm$^{-3}$,
- average size between 100 $\mu$m and 400 $\mu$m, and
- level of moisture of 2.9 %.

| Test N° | Compression speed (mm/s) | Compaction ratio (%) | Hardness before moistening (N) | Amount of water per unit of surface area (mg/cm$^2$) | Drying duration by IR (s) | Hardness after drying (N) |
|---|---|---|---|---|---|---|
| 6 | 125 | 56 | < 10 | 1.29 | 12 | 50 |

The dissolution score of these solid milks is 1.

Test 7: The whole milk powder has the following features:

- density of 0.38, that is to say a mass density of 0.38 g.cm$^{-3}$,
- average size between 100 $\mu$m and 400 $\mu$m, and
- level of moisture of 3.7 %.

| Test N° | Compression speed (mm/s) | Compaction ratio (%) | Hardness before moistening (N) | Amount of water per unit of surface area (mg/cm$^2$) | Drying duration by IR (s) | Hardness after drying (N) |
|---|---|---|---|---|---|---|
| 7 | 200 | 59 | < 10 | 1.0 | 6 | 44 |

Test 8: The semi-skimmed milk powder has the following features:

- density of 0.39, that is to say a mass density of 0.39 g.cm$^{-3}$,
- average size between 100 $\mu$m and 400 $\mu$m, and
- level of moisture of 4.1 %.

| Test N° | Compression speed (mm/s) | Compaction ratio (%) | Hardness before moistening (N) | Amount of water per unit of surface area (mg/cm$^2$) | Drying duration by IR (s) | Hardness after drying (N) |
|---|---|---|---|---|---|---|
| 8 | 125 | 75 | < 10 | 1.1 | 6 | 50 |

Example 2: Influence of the holding time

Measurement of the dissolution time:

Two tablets are placed in a beaker containing 200 mL of water at 40 °C. The content of the beaker is gently stirred using a magnetic stirrer and is kept at 40 °C during the analysis. An electrode which is immersed in the beaker measures conductivity every 3 seconds. The curve of conductivity over time is converted into percentage of the solid dissolved over time, with the maximum value of conductivity achieved being taken as 100 % of the dissolved solid. Values corresponding to 50 % of the dissolved solid and 90 % of the dissolved solid were obtained.

The infant milk powder has the following features:

- density of 0.46, that is to say a mass density of 0.46 g.cm$^{-3}$,
- average size between 100 $\mu$m and 400 $\mu$m, and
- level of moisture of 2.1 %.

Method: 4.5 g of milk powder are placed in a cylindrical die having a diameter of 25 mm. The milk powder is compacted at compression speed of 125 mm/s or 200 mm/s until compaction ratio of 61 or 64 % is achieved. For tests B and D, once the compaction ratio had been achieved it was maintained at constant volume for 300 ms and then pressure is reduced to remove the solid milk.

| Test N° | Compression speed (mm/s) | Holding duration (ms) | Compaction ratio (%) | Duration to reach 50 % of the dissolved solid milk (s) | Duration to reach 90 % of the dissolved solid milk (s) |
|---|---|---|---|---|---|
| A | 125 | 0 | 61 | 35 | 50 |
| B | 125 | 300 | 61 | 42 | 94 |
| C | 200 | 0 | 64 | 46 | 87 |
| D | 200 | 300 | 64 | 92 | 166 |

Conclusion:

These tests demonstrate a significant increase in the duration required to reach 50 % and 90 % of the dissolved solid when a holding duration combined with a compression speed between 110 and 200 mm/s is applied.

Example 3 (illustrative): Influence of the steps of moistening and drying following features:

- density of 0.46, that is to say a mass density of 0.46 g.cm$^{-3}$,
- average size between 100 $\mu$m and 400 $\mu$m, and
- level of moisture of 2.1 %.

Method: 4.5 g of milk powder are placed in a cylindrical die having a diameter of 25 mm. The milk powder is compacted at a compression speed of 125 mm/s until a compaction ratio of 58 % is achieved. The following tests were carried out using moistening and drying technologies making it possible to vary the moistening and drying durations.

| Test N° | Compaction ratio(%) | Moistening conditions | Moistening duration (s) | Amount of water per unit of surface area (mg/cm$^2$) | Drying temp. °C | Drying duration (s) | Hardness after drying (N) |
|---|---|---|---|---|---|---|---|
| E | 58 | 75 °C, 85 % RH | 6 | 1.46 | 80 °C | 65 | 14 |
| F | 58 | 75 °C, 85 % RH | 6 | 1.46 | 80 °C | 45 | 17 |

It is clear that solid milks of low hardness, more specifically less than 20 N are obtained. The following tests were carried out using rapid moistening by spraying, and slow drying by hot air:

| Test N° | Compaction rario(%) | Moistening conditions | Moistening duration (s) | Amount of water per unit of surface area (mg/cm$^2$) | Drying temp. °C | Drying duration (s) | Hardness after drying (N) |
|---|---|---|---|---|---|---|---|
| G | 62 | spraying | 500 | 2.52 | 60 °C | 27 | 15 |
| H | 62 | spraying | 500 | 2.52 | 60 °C | 31 | 11 |

The hardness of the solid milk does not increase sufficiently with rapid moistening by spraying and a slow drying duration of approximately 30 min. Moreover, the formation of the surface crust is probably thicker since the dissolution of the solids deteriorates rapidly although hardness is low, more specifically less than 20 N.

In accordance with the test in a baby bottle with water at 40 °C and shaking for 30 s, the dissolution score is respectively:

- for example G: 7, which means that large lumps are recovered on the sieve with meshes of 630 μm,
- for example H: 10, which means that almost all the solids are recovered on the screen with meshes of 630 μm.

Conclusion:

The hardness of the solid milks is not improved, or is only slightly improved if the steps of moistening and drying are carried out over long periods greater than 1 s and 30 s respectively. Furthermore, the result is a significant increase in the dissolution duration, whereas the hardness of the solid is not increased satisfactorily.

Example 4: Moisture in solid milks

The infant milk powder has the following features:

- density of 0.48, that is to say a mass density of 0.48 g/cm$^3$
- average size between 100 μm and 400 μm, and
- level of moisture of 3.82 %

Production of solid milks:

Solid milks were produced on a rotary press manufactured by EUROTAB® TECHNOLOGIES with the following parameters:

- weight: 4.9 g / solid
- compaction ratio : 56 %
- quantity of water sprayed : 1.46 mg / cm$^2$
- drying with IR lamps during 13 s

After cooling at temperature less than 30°C, the solid milk mechanical strength was 0.105 MPa. The dissolution score, according to the protocol in baby bottle described in example 1, was 1.

Method to measure the level of moisture:

The moisture analysis is realized with a HR73 Halogen Moisture Analyzer from METTLER Toledo. The powder sample of 1.5 g is placed in an aluminum plate (cylindrical with diameter 10 cm). The analysis is realized by applying an increase of temperature from 20 °C to 120 °C during 5 min and the level of moisture is determined after 20 minutes at 120 °C. It is expressed in w/w %.

Preparation of sample to determine the level of moisture in the crust:

The outside surface is scratched with a blade with precaution in order to collect enough sample for the moisture analysis. About 12 solid milks are used to collect 1.5 g of sample.

Preparation of sample to determine the level of moisture in the core:

The solid milk is broken into two pieces and the core is withdrawn with a blade with precaution. About 3 solid milks are used to collect 1.5g of sample.

Preparation of sample to determine the level of moisture of the entire solid milk:

One solid milk is crushed in small fractions with precaution in a mortar and 1.5 g of the crushed powder is collected to do the analysis.

Results:

| Sample | Level of moisture (%) | Difference vs initial milk powder (%) |
|---|---|---|
| Crust | 4.07 | 0.25 |
| Core | 3.94 | 0.12 |
| Entire solid milk | 398 | 0.16 |
| Initial milk powder | 3.82 | 0 |

Conclusions:

The difference of moisture between the crust of the solid milk and the initial milk powder is less than 0.5%.

The difference of moisture between the core of the solid milk or the entire solid milk and the initial milk powder is less than 0.2 %.

The level of moisture in the solid milk is then well controlled to be no more than 0,2% higher or lower than the level of moisture of the initial milk powder used to produce the solid milk.

Example 5. Method for making SEM pictures and measure solid milk crust thickness

Apparatus:

- Knife or scalpel

- Tweezers

- SEM stubs

- Carbon stickers

- Ruler

- JEOL JFC-1200 fine coater (for gold coating samples)

- JEOL JSM-5610 Scanning Electron Microscope

- A graphical software program or SEM software for sizing crust thickness

Procedure

- Obtain a solid milk and carefully break it. A knife and scalpel are not suitable to obtain a suitable crust intersection image.
- Cut away excessive tablet material to fit the carbon sticker.
- Take a SEM stub and stick a carbon sticker on it.
- Take the prepared solid milk part and stick it to the carbon sticker on the stub, orientating the intersection upwards (away from the sticker).
- Take the prepared stub with the solid milk part and use the fine coater to apply an appropriate gold layer according to the manufacturer's instructions.
- Transfer the gold coated solid milk sample to the SEM, and start the imaging procedure according to manufacturer's instructions.
- Obtain an image with the desired magnification, and make sure the correct scale indicator for the set magnification is in the picture.
- Use the SEM software or another imaging software package to measure the local thickness of the crust in ten different points on the outside surface of the crust and calculate the average. On the image of a cut two lines can be drawn: the outside average limit line of the crust and the inside average limit line of the crust, the distance between the two lines being the average thickness of the crust as previously calculated, the visible densification of the crust starting to fade, in average, from the inside average limit line of the crust.

Result:

The average crust thickness is measured from a solid milk made from an infant milk powder with moisture level of 3.1wt%. In this example this procedure results in an average crust thickness of about 330 μm. This shows that the method according to the description and invention can result in solid milks with a crust thickness between 150 μm and 1500 μm.

**Claims**

1. A solid milk of compressed milk powder having a core/crust structure, wherein the solid milk is obtained by the method comprising a compression step, wherein milk particles are compressed to obtain a compressed and solid milk unit, then a moistening step, then a drying step, wherein:

    • the compression step is carried out with a compaction ratio comprised between 50 % and 80 %,
    • in the moistening step, water is sprayed on the outside surface of the compressed and solid milk unit with an amount comprised between 0.1 mg and 8 mg per cm$^2$ of the area of the said outside surface, the duration of the moistening step being less than 1 s, to obtain a moistened solid unit having a moistened outside layer of at least two rows of milk particles,
    • the drying step follows the moistening step less than 10 s, the duration of the drying step being less than 30 s, wherein the drying is carried out by applying short-wavelength infrared (IR), so as to obtain the solid milk having a core/crust structure, the average thickness of the crust being at least the thickness of two rows of milk particles.

2. The solid milk according to claim 1 wherein the average thickness of the crust is between 150 μm and 1.5 mm.

3. The solid milk according to claim 1 or 2 wherein the milk particles have an average size comprised between 30 μm and 700 μm, preferably comprised between 60 μm and 400 μm, more preferably comprised between 75 μm and 300 μm.

4. The solid milk according to any one of the preceding claims, wherein the crust has an average thickness between 200 μm and 1,000 μm, more preferably between 200 μm and 500 μm.

5. The solid milk according to any one of the preceding claims, having a dissolution duration in an aqueous medium, at a temperature comprised between 20 °C and 100 °C, of less than one minute.

6. The solid milk according to any one of the preceding claims, having a % friability of less than 10 %.

7. The solid milk according to any one of the preceding claims, having a solid milk mechanical strength comprised between 0.01 MPa and 0.6 MPa.

8. The solid milk according to any one of the preceding claims, wherein the level of porosity of the crust is less than the level of porosity of the core.

9. The solid milk according to any one of the preceding claims, wherein the crust is a mainly continuous structure in the sense that the milk particles and the milk agglomerates are no longer mechanically substantially separated each from the other having been dissolved, the continuous structure having however a certain porosity, and the core is a mainly discontinuous structure in the sense that the milk particles and the milk agglomerates are touching each other, leaving empty spaces between, the particles having almost the same shape and dimensions as they have within initial milk powder.

10. The solid milk according to any one of the preceding claims, being compressed milk powder in the form of a tablet, pellet of pill.

11. The solid milk according to any one of the preceding claims, being compressed milk powder wherein the milk powder is selected from skimmed or semi-skimmed milk powder, whole milk powder and infant milk powder.

**Patentansprüche**

1.  Eine feste Milch aus komprimiertem Milchpulver mit einer Kern/Kruste-Struktur, wobei die feste Milch durch das Verfahren erhalten wird, umfassend einen Komprimierungsschritt, wobei Milchpartikel komprimiert werden, um eine komprimierte und feste Milcheinheit zu erhalten, dann einen Befeuchtungsschritt, dann einen Trocknungsschritt, wobei:

    - der Komprimierungsschritt mit einem Kompaktierungsverhältnis, das zwischen 50% und 80% umfasst ist, durchgeführt wird,
    - in dem Befeuchtungsschritt Wasser auf die äußere Oberfläche der komprimierten und festen Milcheinheit mit einer Menge, die zwischen 0,1 mg und 8 mg pro cm$^2$ der Fläche der besagten äußeren Oberfläche umfasst ist, besprüht wird, die Dauer des Befeuchtungsschritts weniger als 1 s ist, um eine befeuchtete feste Einheit zu erhalten, die eine befeuchtete Außenseitenschicht aus mindestens zwei Reihen von Milchpartikeln hat,
    - der Trocknungsschritt dem Befeuchtungsschritt in weniger als 10 s folgt, die Dauer des Trocknungsschritts weniger als 30 s ist, wobei das Trocknen durch Anwenden kurzwelliger Infrarotstrahlung (IR) durchgeführt wird,

    um so die feste Milch mit einer Kern/Kruste-Struktur zu erhalten, wobei die durchschnittliche Dicke der Kruste weniger als die Dicke von zwei Reihen Milchpartikeln ist.

2.  Die feste Milch nach Anspruch 1, wobei die durchschnittliche Dicke der Kruste zwischen 150 µm und 1,5 mm ist.

3.  Die feste Milch nach Anspruch 1 oder 2, wobei die Milchpartikel eine durchschnittliche Größe haben, die zwischen 30 µm und 700 µm umfasst ist, vorzugsweise zwischen 60 µm und 400 µm umfasst ist, darüber hinaus bevorzugt zwischen 75 µm und 300 µm umfasst ist.

4.  Die feste Milch nach einem der vorangehenden Ansprüche, wobei die Kruste eine durchschnittliche Dicke zwischen 200 µm und 1.000 µm, darüber hinaus bevorzugt zwischen 200 µm und 500 µm hat.

5.  Die feste Milch nach einem der vorangehenden Ansprüche, mit einer Auflösungsdauer von weniger als einer Minute in einem wässrigen Medium bei einer Temperatur, die zwischen 20°C und 100°C umfasst ist.

6.  Die feste Milch nach einem der vorangehenden Ansprüche mit einer %-Brüchigkeit von weniger als 10%.

7.  Die feste Milch nach einem der vorangehenden Ansprüche mit einer mechanischen Stärke einer Festmilch, die zwischen 0,01 MPa und 0,6 MPa umfasst ist.

8.  Die feste Milch nach einem der vorangehenden Ansprüche, wobei der Grad der Porosität der Kruste weniger als der Grad der Porosität des Kerns ist.

9.  Die feste Milch nach einem der vorangehenden Ansprüche, wobei die Kruste eine hauptsächlich kontinuierliche Struktur in dem Sinne ist, dass die Milchpartikel und die Milchagglomerate nicht länger mechanisch im wesentlichen getrennt von den anderen, die gelöst sind, sind, wobei die kontinuierliche Struktur allerdings eine gewisse Porosität hat und der Kern hauptsächlich eine diskontinuierliche Struktur in dem Sinne hat, dass die Milchpartikel und die Milchagglomerate einander berühren und freie Räume zwischen ihnen lassen, die Partikel eine annähernd gleiche Größe und Abmessung wie die haben, die in dem ursprünglichen Milchpulver sind.

10. Die feste Milch nach einem der vorangehenden Ansprüche, wobei die feste Milch komprimiertes Milchpulver in Form einer Tablette, eines Pellets oder einer Pille ist.

11. Die feste Milch nach einem der vorangehenden Ansprüche, wobei die feste Milch komprimiertes Milchpulver ist, wobei das Milchpulver ausgewählt ist aus Magermilchpulver oder Semi-magermilchpulver, Vollmilchpulver und Säuglingsmilchpulver.

**Revendications**

1. Lait solide constitué de poudre de lait comprimé ayant une structure de noyau/croûte, ledit lait solide étant obtenu par le procédé comprenant une étape de compression dans laquelle les particules de lait sont comprimées afin d'obtenir une unité de lait solide et comprimé, ensuite une étape d'humidification, puis une étape de séchage, où :

   • l'étape de compression est réalisée avec un rapport de compactage compris entre 50% et 80%,
   • dans l'étape d'humidification, de l'eau est pulvérisée sur la surface extérieure de l'unité de lait solide et comprimé en une quantité comprise entre 0,1 mg et 8 mg par $cm^2$ de l'aire de ladite surface extérieure, la durée de l'étape d'humidification étant inférieure à 1 s, pour obtenir une unité solide humidifiée ayant une couche externe humidifiée d'au moins deux rangées de particules de lait,
   • l'étape de séchage intervient moins de 10 s après l'étape d'humidification, la durée de l'étape de séchage étant inférieure à 30 s, où le séchage est réalisé par l'application d'infrarouge (IR) à courte longueur d'onde,

   de manière à obtenir le lait solide ayant une structure de noyau/croûte, l'épaisseur moyenne de la croûte correspondant au moins à l'épaisseur de deux rangées de particules de lait.

2. Lait solide selon la revendication 1, dans lequel l'épaisseur moyenne de la croûte est comprise entre 150 $\mu$m et 1,5 mm.

3. Lait solide selon la revendication 1 ou 2, dans lequel les particules de lait ont une dimension moyenne comprise entre 30 $\mu$m et 700 $\mu$m, de préférence, comprise entre 60 $\mu$m et 400 $\mu$m, plus préférablement, comprise entre 75 $\mu$m et 300 $\mu$m.

4. Lait solide selon l'une quelconque des revendications précédentes, dans lequel la croûte a une épaisseur moyenne comprise entre 200 $\mu$m et 1 000 $\mu$m, plus préférablement entre 200 $\mu$m et 500 $\mu$m.

5. Lait solide selon l'une quelconque des revendications précédentes, ayant une durée de dissolution en milieu aqueux, à une température comprise entre 20°C et 100°C, de moins d'une minute.

6. Lait solide selon l'une quelconque des revendications précédentes, ayant un % de friabilité de moins de 10%.

7. Lait solide selon l'une quelconque des revendications précédentes, ayant une résistance mécanique de lait solide comprise entre 0,01 MPa et 0,6 MPa.

8. Lait solide selon l'une quelconque des revendications précédentes, dans lequel le niveau de porosité de la croûte est inférieur au niveau de porosité du noyau.

9. Lait solide selon l'une quelconque des revendications précédentes, dans lequel la croûte est une structure essentiellement continue in ce sens que les particules de lait et les agglomérats de lait ne sont plus substantiellement séparés mécaniquement les uns des autres après avoir été dissous, la structure continue ayant toutefois une certaine porosité, et le noyau est une structure essentiellement discontinue en ce sens que les particules de lait et les agglomérats de lait se touchent mutuellement, laissant des espaces vides entre eux, les particules ayant quasiment la même forme et les mêmes dimensions que celles qu'elles ont dans la poudre de lait initiale.

10. Lait solide selon l'une quelconque des revendications précédentes, lequel étant du lait en poudre comprimé sous forme de comprimé, de pastille ou de pilule.

11. Lait solide selon l'une quelconque des revendications précédentes, lequel étant du lait en poudre comprimé, où le lait en poudre est choisi parmi le lait écrémé ou demi-écrémé en poudre, le lait entier en poudre et le lait infantile en poudre.

## *Fig. 1*

*Fig. 2*

500 µm

*Fig. 3*

500 µm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007077970 A
- WO 2010073724 A
- EP 1048216 A
- WO 2011158480 A
- WO 200707790 A

**Non-patent literature cited in the description**

- **SHIBATA.** *Milk Science,* 2010, vol. 59 (3